# EUROPEAN PATENT APPLICATION

(11) **EP 4 826 812 A1**
(43) Date of publication of application: **21.10.2026**
(21) Application number: 25227838.7
(22) Date of filing: 31.12.2025
(51) Int. Cl.: H01M 10/04, H01M 10/0583, H01M 50/46, H01M 50/466

(54) **ELECTRODE ASSEMBLY AND SECONDARY BATTERY COMPRISING THE ELECTRODE ASSEMBLY**

(30) Priority: 17.04.2025 KR 20250050005
(71) Applicant: SAMSUNG SDI CO., LTD., Yongin-si, Gyeonggi-do 17084 (KR)
(72) Inventor: YUN, Young Kwang, 17084 Yongin-si (KR)
(74) Representative: Marks & Clerk LLP

(57) **Abstract**

The electrode assembly according to one or more embodiments includes a first electrode, a second electrode, and a separator for separating the first electrode and the second electrode, bent to form insertion parts respectively accommodating the first electrode and the second electrode, and including a first separator part at a lowermost portion, a second separator part at an uppermost portion and bonded to the first separator part, and a third separator part between the first separator part and the second separator part.

## Description

### BACKGROUND

### 1. Field

Embodiments relate to an electrode assembly and a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The information disclosed in this section is provided only for enhancement of understanding of the background of the disclosure and therefore it may contain information that does not form the prior art.

### SUMMARY

Embodiments provide a secondary battery having improved safety.

An electrode assembly according to a first aspect includes: a first electrode; a second electrode; and a separator between the first electrode and the second electrode, the separator bent to form insertion parts respectively accommodating the first electrode and the second electrode, the insertion parts including a first separator part at a lowermost portion, a second separator part at an uppermost portion, and a third separator part between the first separator part and the second separator part, wherein the second separator part is bonded to the first separator part.

The first separator part may include a first support part, wherein the second separator part includes a second support part and a second extension part bending from an end of the second support part and bonded to the first support part.

The electrode assembly may further include an adhesive member bonding the second extension part and the first support part.

The first separator part may include a first end including an end of the first support part, wherein the second separator part includes a second end bonded to the first separator part and including an end of the second extension part.

The second extension part and the first support part may be bonded by thermal fusion.

The first separator part may include a first end bonded to the second separator part and including an end of the first support part, wherein the second separator part includes a second end bonded to the first separator part and including an end of the second extension part.

The separator may include an overlapping region where the second extension part and a portion of the first support part overlap.

The first electrode may include a lowermost first electrode under the first support part and an uppermost first electrode above the second support part and having a different size from the lowermost first electrode.

A width or a length of the lowermost first electrode may be less than that of the uppermost first electrode.

The first separator part may include a first support part and a first extension part bending from an end of the first support part, wherein the second separator part includes a second support part and a second extension part bending from an end of the second support part and bonded to the first extension part.

The electrode assembly may further include an adhesive member bonding the first extension part and the second extension part.

The first extension part and the second extension part may be bonded by thermal fusion.

The separator may include an overlapping region where the first extension part and the second extension part overlap.

The first separator part, the second separator part, and the third separator part may be integral.

An electrode assembly according to a second aspect includes: a first electrode; a second electrode; and a separator between the first electrode and the second electrode, the separator bent to form insertion parts respectively accommodating the first electrode and the second electrode, the insertion parts including a first separator part at a lowermost portion, a second separator part at an uppermost portion, and a third separator part between the first separator part and the second separator part, wherein the third separator part is bonded to at least one of the first separator part and the second separator part.

The first separator part may include a first support part and a first extension part bending from an end of the first support part, wherein the second separator part includes a second support part and a second extension part bending from an end of the second support part, and wherein at least one of the first extension part or the second extension part is bonded to at least one bending part of the third separator part.

The first extension part may be bonded to a first bending part of the third separator part, wherein the second extension part is bonded to a second bending part of the third separator part.

The first extension part and the second extension part may be bonded to a same bending part of the third separator part as the at least one bending part.

The first extension part may be bonded to the bending part of the third separator part, wherein the second extension part is bonded to the first extension part.

A secondary battery according to one or more embodiments includes: a case; and an electrode assembly according to the first aspect or the second aspect disposed in the case.

At least some of the above and other features of the invention are set out in the claims.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of example embodiments that follows, and the disclosure is not to be construed as limited to what is shown in such drawings. In the drawings:
Fig. 1 is a perspective view showing a secondary battery according to one or more embodiments.
Fig. 2 is a drawing illustrating a manufacturing process of an electrode assembly according to one or more embodiments.
Fig. 3 is a side view of an electrode assembly according to a comparative example.
Fig. 4 is a side view of an electrode assembly according to one or more embodiments.
Fig. 5 is a view explaining the bonding of separator parts.
Fig. 6 is a drawing illustrating bonding of a separator of the electrode assembly according to one or more embodiments.
Figs. 7 to 12 are side views of electrode assemblies according to one or more other embodiments.
Figs. 13 and 14 are perspective views showing a battery pack including battery modules according to some embodiments.
Figs. 15 and 16 are respectively a perspective view and a side view showing a vehicle including battery packs according to some embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the drawings, the relative sizes of elements, layers, and regions may be exaggerated for clarity and/or descriptive purposes. In other words, because the sizes and thicknesses of elements in the drawings are arbitrarily illustrated for convenience of description, the disclosure is not limited thereto. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "over," "higher," "upper side," "side" (e.g., as in "sidewall"), and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, if a first part is described as being arranged "on" a second part, this indicates that the first part is arranged at an upper side or a lower side of the second part without the limitation to the upper side thereof on the basis of the gravity direction.

Further, the phrase "in a plan view" means if an object portion is viewed from above, and the phrase "in a schematic cross-sectional view" means if a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that if an element, layer, region, or component (e.g., an apparatus, a device, a circuit, a wire, an electrode, a terminal, a conductive film, etc.) is referred to as being "formed on," "on," "connected to," or "(operatively, functionally, or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, if a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a transistor, a resistor, an inductor, a capacitor, a diode and/or the like. Accordingly, a connection is not limited to the connections illustrated in the drawings or the detailed description and may also include other types of connections. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, if a portion of a layer, a film, an area, a plate, or the like is formed on another portion, a forming direction is not limited to an upper direction but includes forming the portion on a side surface or in a lower direction. On the contrary, if a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that if an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XY, YZ, and XZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are only used to distinguish one element, member, component, region, area, layer, section, or portion from another element, member, component, region, area, layer, section, or portion. Thus, a first element, component, region, layer, or section described below could be termed a second element, component, region, layer, or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present disclosure. The terms or words used in the present specification and claims are not to be limitedly interpreted as general or dictionary meanings and should be interpreted as meanings and concepts that are consistent with aspects of the present disclosure on the basis that an inventor can be their own lexicographer to appropriately define concepts of terms to describe the embodiments in the best way.

As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure." Furthermore, the expression "being the same" may mean "being substantially the same." In other words, the expression "being the same" may include a range that can be tolerated by those of ordinary skill in the art. The other expressions may also be expressions from which "substantially" has been omitted.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The electronic or electric devices and/or any other relevant devices or components according to embodiments of the present disclosure described herein may be implemented utilizing any suitable hardware, firmware (e.g., an application-specific integrated circuit), software, or a combination of software, firmware, and hardware, to process data or digital signals. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Circuit hardware may include, for example, application specific integrated circuits (ASICs), general purpose or special purpose central processing units (CPUs) that is configured to execute instructions stored in a non-transitory storage medium, digital signal processors (DSPs), graphics processing units (GPUs), and programmable logic devices, such as field programmable gate arrays (FPGAs).

Software components may indicate data used by executable codes and/or executable codes in a storage medium which is able to be addressed. Accordingly, software components may be, for example, object-oriented software components, class components, and task components, and may include processes, functions, properties, procedures, subroutines, program code segments, drivers, firmware, microcodes, circuits, data, database, data structures, tables, arrangements or variables. Further, the various components of these devices may be a process or thread, running on one or more processors, in one or more computing devices, executing computer program instructions and interacting with other system components for performing the various functionalities described herein. The computer program instructions are stored in a memory that may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

In some embodiments well-known structures and devices may be described in the accompanying drawings in relation to one or more functional blocks (e.g., block diagrams), units, and/or modules to avoid unnecessarily obscuring various embodiments. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present disclosure. In addition, in some embodiments, the block, unit and/or module may be physically combined into more complex blocks, units, and/or modules without departing from the scope of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Hereinafter, an electrode assembly and a secondary battery according to one or more embodiments will be described with reference to the drawings.

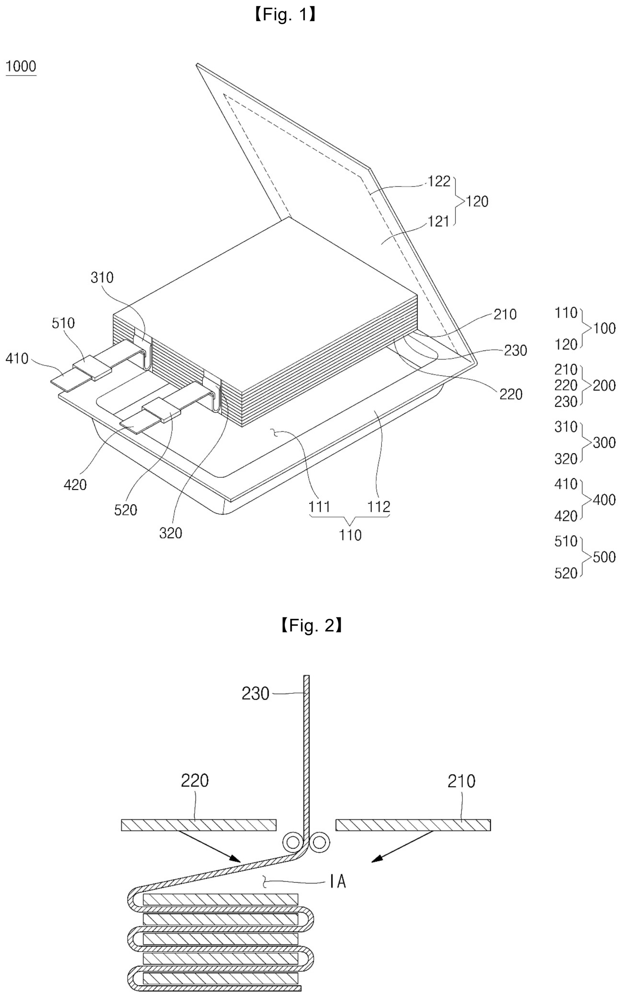

Referring to Fig. 1, a secondary battery 1000 according to one or more embodiments includes a case 100 and an electrode assembly 200.

The case 100 may include an accommodation part 110 and a cap part 120. The accommodation part 110 and the cap part 120 may be connected. The case 100 may be formed in a pouch shape.

The accommodation part 110 may include a concave part 111 and a first sealing region 112. The accommodation part 110 may include, or define, an accommodation space. In detail, the accommodation part 110 may include a bottom surface and an inner side surface formed by the concave part 111. The accommodation space may be formed by the bottom surface and the inner side surface.

The first sealing region 112 may be located at the edge of the accommodation part 110. A sealing layer may be located on the first sealing region 112.

The cap part 120 may include a cover part 121 and a second sealing region 122.

The cover part 121 may cover the accommodation part 110. In detail, the cover part 121 may cover the electrode assembly 200 accommodated in the accommodation part 110.

The second sealing region 122 may be located at the edge of the cap part 120. The sealing layer may be located on the second sealing region 122. The first sealing region 112 and the second sealing region 122 may overlap. In detail, if the accommodation part 110 is covered by the cap part 120, the first sealing region 112 and the second sealing region 122 may face each other. The accommodation part 110 and the cap part 120 may be bonded by the sealing layer.

The electrode assembly 200 may be accommodated in the case 100. For example, the electrode assembly 200 may be accommodated within the receiving space of the case. For example, the electrode assembly 200 may be accommodated within the receiving space together with the electrolyte.

In the drawing, one electrode assembly is illustrated as being accommodated in the case, although the present disclosure is not limited thereto. Two or more electrode assemblies may be accommodated in the case.

The electrode assembly 200 may include a first electrode 210, a second electrode 220, and a separator 230.

The first electrode 210 may include a first current collector and a first active material layer on the first current collector. The first current collector may include a metal foil, such as aluminum or an aluminum alloy. The first active material layer may include a transition metal oxide. For example, the first electrode 210 may be a positive electrode.

The first electrode 210 may be connected to a first electrode tab 310. The first active material layer is not located on, or is omitted from, the first electrode tab 310. The first electrode tab 310 may be welded on the first current collector on which the first active material layer is not located. In one or more embodiments, the first electrode tab 310 may be integral with the first current collector. For example, the first current collector may include a first uncoated portion where the first active material layer is not located. The first uncoated portion may be notched. The first electrode tab 310 may be formed by the first uncoated portion. The first electrode tab 310 may include the same material as the first current collector. The first electrode tab 310 may be a substrate tab.

The second electrode 220 may include a second current collector and a second active material layer on the second current collector. The second current collector may include a metal foil, such as copper, a copper alloy, nickel, or a nickel alloy. The second active material layer may include graphite or carbon. For example, the second electrode 220 may be a negative electrode.

The second electrode 220 may be connected to a second electrode tab 320. The second active material layer is not located on, or is omitted from, the second electrode tab 320. The second electrode tab 320 may be welded on the second current collector on which the second active material layer is not located. In one or more embodiments, the second electrode tab 320 may be integral with the second current collector. For example, the second current collector may include a second uncoated portion on which the second active material layer is not located. The second uncoated portion may be notched. The second electrode tab 320 may be formed by the second uncoated portion. The second electrode tab 320 may include the same material as the second current collector. The second electrode tab 320 may be a substrate tab.

The first electrode tab 310 and the second electrode tab 320 may each be connected to a lead 400. For example, the first electrode tab 310 may be connected to a first lead 410. The first electrode tab 310 may be connected to a first external terminal by the first lead 410. The second electrode tab 320 may be connected to a second lead 420. The second electrode tab 320 may be connected to a second external terminal by the second lead 420. The first lead 410 may include the same material as the first electrode tab 310. The second lead 420 may include the same material as the second electrode tab 320. The electrode tabs 310, 320 and the leads 410, 420 may be coupled by welding.

An insulating layer 500 may be located on the leads 410,420. For example, a first insulating layer 510 may be located on the first lead 410. The first insulating layer 510 may surround a portion of the first lead 410. A second insulating layer 520 may be located on the second lead 420. The second insulating layer 520 may surround a portion of the second lead 420. The lead 400 may be insulated from the case 100 by the insulating layer 500. The lead 400 and the case 100 may be suitably bonded by the insulating layer 500 and the sealing layer. The first lead 410 and the second lead 420 may be insulated by the insulating layer 500.

Fig. 2 is a drawing illustrating a manufacturing process of an electrode assembly according to one or more embodiments.

The electrode assembly 200 may be formed in a stacked manner. For example, the electrode assembly 200 may be formed in a Z-stack manner. In detail, the separator 230 may be supplied in a roll form, and the separator 230 may be unwound while being bent. The separator 230 may be unwound while forming a plurality of insertion parts IA.

The first electrode 210 and the second electrode 220 may be sequentially inserted into the insertion parts IA, respectively. The separator 230 may be stacked to be located between the first electrode 210 and the second electrode 220. Subsequently, the electrode assembly 200 may be pressurized.

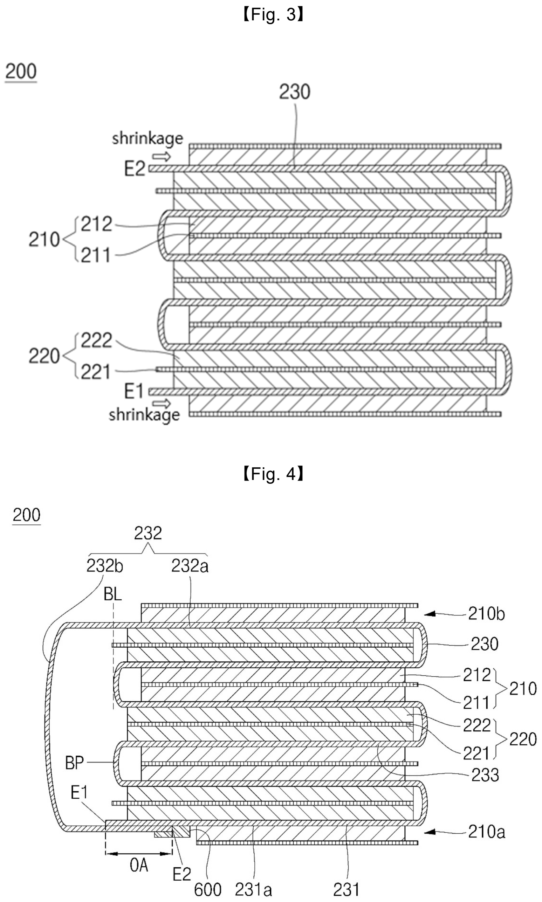

Fig. 3 is a side view of an electrode assembly according to a comparative example. Referring to Fig. 3, the separator 230 includes a first end E1 and a second end E2.

The first electrode 210 and the second electrode 220 may be sequentially stacked. The first electrode 210 or the second electrode 220 may be located at the lowermost and uppermost portions of the electrode assembly 200.

The first end E1 and the second end E2 are exposed to the outside of the electrode assembly. The first end E1 and the second end E2 may be damaged by external heat. For example, if the secondary battery is exposed to a high-temperature environment, the first end E1 and the second end E2 may shrink, such that first electrode 210 and the second electrode 220 may be short-circuited.

The electrode assembly and a secondary battery according to one or more embodiments of the present disclosure may reduce the shrinkage of the first end E1 and the second end E2, the likelihood of short-circuiting between the first electrode 210 and the second electrode 220 may be reduced or prevented, and the safety of a secondary battery including the electrode assembly may be improved.

Hereinafter, the electrode assembly 200 according to one or more embodiments will be described with reference to Figs. 4 to 11.

Referring to Figs. 4 to 6, the separator 230 may be divided into a plurality of separator parts according to their positions. For example, the separator 230 may include a first separator part 231, a second separator part 232, and a third separator part 233. The third separator 233 may include a plurality of bending part BP.

The first separator part 231, the second separator part 232, and the third separator part 233 may be connected by the bending parts BP. The first separator part 231, the second separator part 232, and the third separator part 233 may be integral.

The first separator part 231 may be located at the lowest portion of the electrode assembly 200. The second separator part 232 may be located at the highest portion of the electrode assembly 200. The third separator part 233 may be located between the first separator part 231 and the second separator part 232.

The first separator part 231 may include a first end E1. The second separator part 232 may include a second end E2. The first separator part 231 and the second separator part 232 may each include a support part and/or an extension part.

The first separator part 231 may include a first support part 231a. The first end E1 may be an end of the first support part 231a. The first support part 231a may support the first electrode 210 and the second electrode 220. The first support part 231a may be located between the first electrode 210 and the second electrode 220.

The second separator part 232 may include a second support part 232a and a second extension part 232b. The second support part 232a and the second extension part 232b are separated by a boundary line BL that is in contact with the end of a bending part BP of the separator 230. The second support part 232a is located on the inner side of the boundary line BL, and the second extension part 232b is located on the outer side of the boundary line BL. The second extension part 232b is located on the outer side of the bending part BP.

The second support part 232a may support the first electrode 210 and the second electrode 220. The second support part 232a may be located between the first electrode 210 and the second electrode 220. The second extension part 232b may be bent and extended from the end of the second support part 232a. For example, the second extension part 232b may be first bent in the thickness direction of the electrode assembly 200 and secondly bent in the extension direction of the electrode assembly 200. The second end E2 may be the end of the second extension part 232b.

After the first electrode 210 is located on the uppermost portion of the electrode assembly 200, the separator 230 may be further unwound by a corresponding length (e.g., predetermined length). For example, the separator 230 may be further unwound by a length that is substantially equal to or greater than the thickness of the electrode assembly 200.

The second separator part 232 may cover the first end E1. In detail, the second extension part 232b may cover the first end E1.

The first separator part 231 and the second separator part 232 may overlap. The second extension part 232b may overlap a portion of the first support part 231a.

The separator 230 may include an overlapping region OA where the first separator part 231 and the second separator part 232 overlap. The first separator part 231 and the second separator part 232 may be in contact with each other, or may be spaced apart from each other, at the overlapping region OA.

The first separator part 231 and the second separator part 232 may be bonded at the lower portion of the electrode assembly 200.

For example, referring to Fig. 4, the first separator part 231 and the second separator part 232 may be bonded by an adhesive member 600. The second extension part 232b and the first support part 231a may be bonded by the adhesive member 600. The adhesive member 600 may cover the second end E2. The second end E2 may be bonded to the first separator part 231.

The adhesive member 600 may include a resin material. For example, the adhesive member 600 may include polyethylene terephthalate (PET) or an acrylic resin.

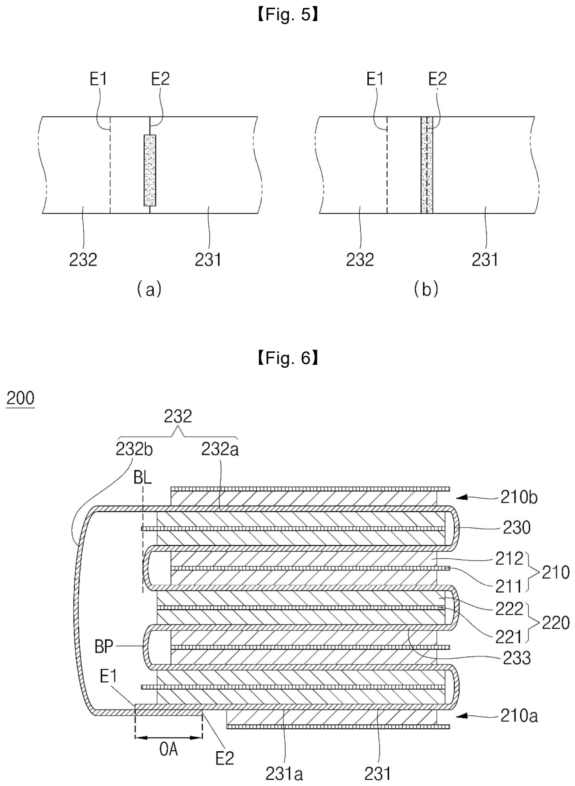

Referring to Fig.s 5(a) and 5(b), the second separator part 232 may cover the first end E1 of the first separator part 231. The adhesive member 600 may cover the second end E2. For example, as shown in Fig. 5(a), the adhesive member 600 may cover a portion of the second end E2. In one or more embodiments, as shown Fig. 5(b), the adhesive member 600 may cover the entire region of the second end E2.

Referring to Fig. 6, in one or more embodiments the first separator part 231 and the second separator part 232 may be directly bonded. The second extension part 232b and the first support part 231a may be directly bonded. In detail, the first separator part 231 and the second separator part 232 may be thermally fused. For example, the first separator part 231 and the second separator part 232 may be bonded through the overlapping region OA. The first end E1 may be bonded to the second separator part 232. The second end E2 may be bonded to the first separator part 231. The first separator part 231 and the second separator part 232 may be bonded without a separate adhesive member.

The first electrode 210 or the second electrode 220 may be located at the uppermost and lowermost portions of the electrode assembly 200. For example, the first electrode 210 may be located at the uppermost and lowermost portions of the electrode assembly 200. A lowermost first electrode 210a may be located under the first support part 231a. An uppermost first electrode 210b may be located on or above the second support part 232a.

The sizes of the lowermost first electrode 210a and the uppermost first electrode 210b may be different. For example, the lowermost first electrode 210a may be smaller than the uppermost first electrode 210b. In detail, the width of the lowermost first electrode 210a may be less than the width of the uppermost first electrode 210b. For example, the width of the lowermost first electrode 210a may be at least about 3 mm less than the width of the uppermost first electrode 210b.

In one or more embodiments, the length of the lowermost first electrode 210a may be less than the length of the uppermost first electrode 210b. For example, the length of the lowermost first electrode 210a may be at least about 3 mm less than the length of the uppermost first electrode 210b.

The lowermost first electrode 210a and the second end E2 may be spaced apart. The lowermost first electrode 210a and the second extension part 232b may be spaced apart. A space may be formed in which the first separator part 231 and the second separator part 232 may be bonded. If the first separator part 231 and the second separator part 232 are thermally bonded, damage to the first active material layer 212 due to heat may be reduced or prevented.

The electrode assembly 200 according to one or more embodiments includes the separator 230. The separator 230 includes the first separator part 231 and the second separator part 232. The first separator part 231 includes the first end E1, and the second separator part 232 includes the second end E2. The second separator part 232 is bent toward the first separator part 231. The first separator part 231 and the second separator part 232 are bonded at the lower portion of the electrode assembly 200. The second end E2 may be bonded to the first separator part 231. In one or more embodiments, the first end E1 may be bonded to the second separator part 232, and the second end E2 may be bonded to the first separator part 231.

According to embodiments, shrinkage of the separator 230 due to heat may be reduced or prevented. In detail, shrinkage of the first end E1 and the second end E2 may be reduced or prevented, short-circuiting of the first electrode 210 and the second electrode 220 is reduced or prevented, and the likelihood of an explosion of the secondary battery 1000 including the electrode assembly 200 may be reduced or prevented.

The electrode assembly 200 includes the lowermost first electrode 210a and the uppermost first electrode 210b. The lowermost first electrode 210a may be smaller than the uppermost first electrode 210b. For example, the length or width of the lowermost first electrode 210a may be less than that of the uppermost first electrode 210b. The second end E2 and the lowermost first electrode 210a may be spaced apart from each other. A space in which the first separator part 231 and the second separator part 232 may be bonded may be formed. Also, if the first separator part 231 and the second separator part 232 are bonded to each other, damage to the lowermost first electrode 210a may be reduced or prevented. The secondary battery 1000 including the electrode assembly 200 may have improved reliability.

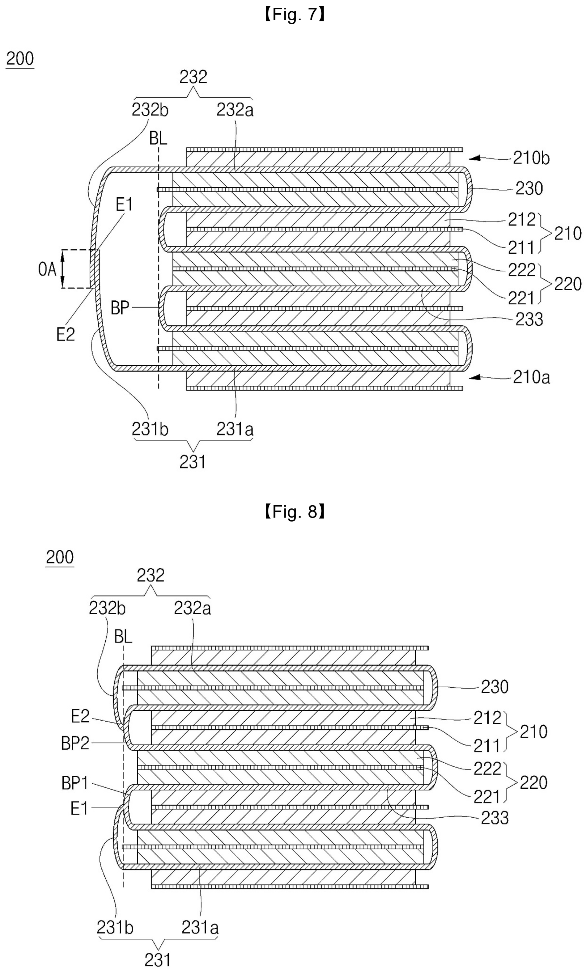

Hereinafter, an electrode assembly 200 according to one or more other embodiments will be described with reference to Figs. 7 to 11. Commonalities with one or more embodiments described above will be omitted. The same drawing reference numerals are given to the same configurations as those of one or more embodiments.

Referring to Fig. 7, the first separator part 231 may include a first support part 231a and a first extension part 231b. The first support part 231a and the first extension part 231b are separated by a boundary line BL that is in contact with the end of the bending part BP of the separator 230. The first support part 231a is located on the inner side of the boundary line BL, and the first extension part 231b is located on the outer side of the boundary line BL. The first extension part 231b is located on the outside of the bending part BP.

The first extension part 231b may be bent and extended from the end of the first support part 231a. For example, the first extension part 231b may be bent in the thickness direction of the electrode assembly. A first end E1 may be the end of the first extension part 231b.

The second separator part 232 may include a second support part 232a and a second extension part 232b. The second extension part 232b may be bent and extended from the end of the second support part 232a. For example, the second extension part 232b may be bent in the thickness direction of the electrode assembly. A second end E2 may be the end of the second extension part 232b.

The first extension part 231b and the second extension part 232b may have the same or similar lengths. In one or more embodiments, the first extension part 231b and the second extension part 232b may have different respective lengths.

The first separator part 231 and the second separator part 232 may partially overlap each other. In detail, the first extension part 231b and the second extension part 232b may partially overlap each other. For example, the second separator part 232 may cover the first end E1 from the outside. In one or more embodiments, the first separator part 231 may cover the second end E2 from the outside. The separator 230 may include an overlapping region OA where the first separator part 231 and the second separator part 232 overlap.

The first separator part 231 and the second separator part 232 may be bonded. For example, the overlapping region OA may be thermally fused. The first separator part 231 and the second separator part 232 may be bonded through the overlapping region OA.

In one or more embodiments, the first separator part 231 and the second separator part 232 may be bonded by an adhesive member. For example, the adhesive member may cover the first end or the second end. The first end E1 and the second separator part 232 may be bonded by the adhesive member. In one or more embodiments, the second end E2 and the first separator part 231 may be bonded by the adhesive member.

The first separator part 231 and the second separator part 232 may be bonded at the side of the electrode assembly 200.

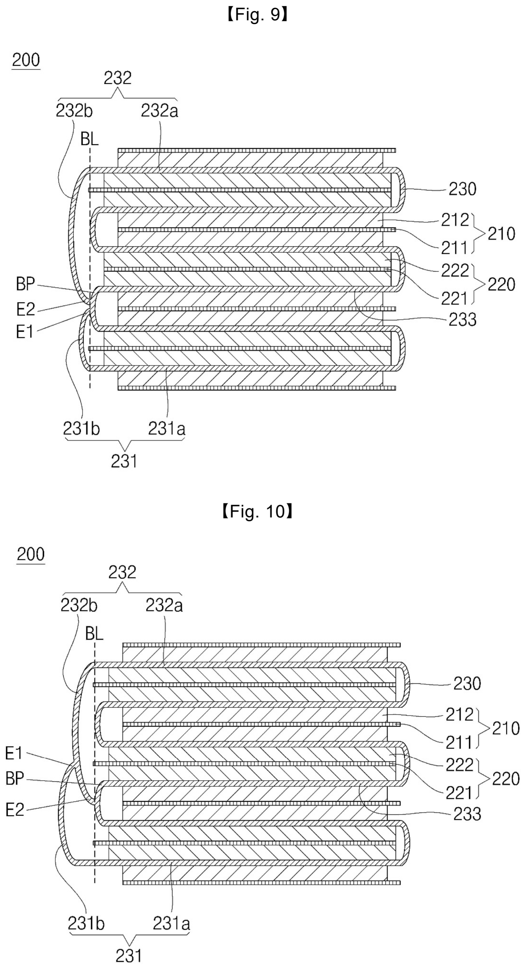

Referring to Figs. 8 and 9, the first separator part 231 and the second separator part 232 do not overlap and do not contact one another. In detail, the first extension part 231b and the second extension part 232b do not overlap.

Referring to Figs. 8 to 10, at least one of the first separator part 231 or the second separator part 232 may be bonded to the third separator part 233.

Referring to Fig. 8, the first separator part 231 may be bonded to the third separator part 233. In detail, the first extension part 231b may be bonded to a first bending part BP1 of the third separator part 233. For example, the first extension part 231b and the first bending part BP1 may be bonded by thermal fusion. In one or more embodiments, the first extension part 231b and the first bending part BP1 may be bonded by the adhesive member.

The second separator part 232 may be bonded to the third separator part 233. In detail, the second extension part 232b may be bonded to a second bending part BP2 of the third separator part 233. For example, the second extension part 232b and the second bending part BP2 may be bonded by thermal fusion. In one or more embodiments, the second extension part 232b and the second bending part BP2 may be bonded by the adhesive member.

Referring to Fig. 9, the first separator part 231 and the second separator part 232 may be bonded to the third separator part 233. In detail, the first extension part 231b and the second extension part 232b may be bonded to the bending part BP of the third separator part 233. The first extension part 231b and the second extension part 232b may be bonded to the same bending part BP. The first extension part 231b, the second extension part 232b, and the bending part BP may be bonded.

For example, the first extension part 231b, the second extension part 232b, and the bending part BP may be bonded by thermal fusion. In one or more embodiments, the first extension part 231b, the second extension part 232b, and the bending part BP may be bonded by the adhesive member.

Referring to Fig. 10, the first separator part 231, the second separator part 232, and the third separator part 233 may be bonded. In detail, the second extension part 232b may be bonded to the bending part BP of the third separator part 233. The first extension part 231b may be bonded to the second extension part 232b. The first extension part 231b, the second extension part 232b, and the bending part BP may be bonded. In another embodiment, the first extension part 231b may be bonded to the bending part BP of the third separator part 233, and the second extension part 232b may be bonded to the first extension part 231b.

The first separator part 231 and the second separator part 232 may be bonded to the third separator part 233 at the side of the electrode assembly 200.

The sizes of the lowermost first electrode 210a and the uppermost first electrode 210b may be the same or similar. The first separator part 231 and the second separator part 232 may be bonded to the third separator part 233 at the side of the electrode assembly 200, respectively. The size of the lowermost first electrode 210a does not need to be reduced for bonding the first separator part 231 and the second separator part 232. The uppermost and lowermost electrodes of the electrode assembly 200 may have the same or similar sizes. The secondary battery may have improved electric capacity.

Because the first separator part 231 and the second separator part 232 are bonded at the side of the electrode assembly 200, damage to the lowermost first electrode during the bonding process may be reduced or prevented.

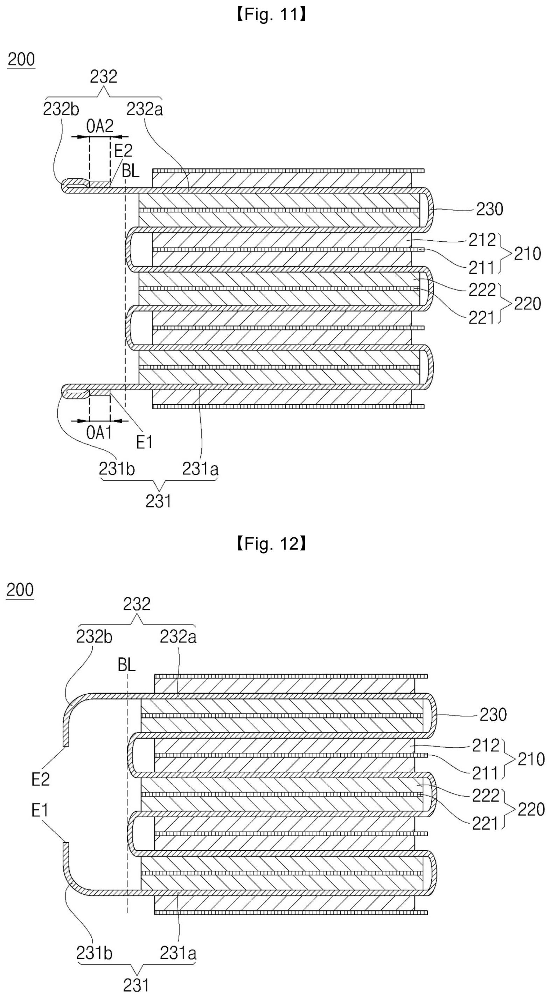

Referring to Figs. 11 and 12, the first separator part 231 and the second separator part 232 do not overlap and do not contact one another. In detail, the first extension part 231b and the second extension part 232b do not overlap and do not contact one another.

Referring to Fig. 11, the first extension part 231b may be bent. In detail, the first extension part 231b may be bent so that the first end E1 is located on the first support part 231a. The first support part 231a and the first extension part 231b may form a first overlapping region OA1.

The first support part 231a and the first extension part 231b may be bonded. For example, the first support part 231a and the first extension part 231b may be bonded by thermal fusion. In one or more embodiments, the first support part 231a and the first extension part 231b may be bonded by the adhesive member.

The second extension part 232b may be bent. In detail, the second extension part 232b may be bent such that the second end E2 is located on the second support part 232a. The second support part 232a and the second extension part 232b may form a second overlapping region OA2.

The second support part 232a and the second extension part 232b may be bonded. For example, the second support part 232a and the second extension part 232b may be bonded by thermal fusion. In one or more embodiments, the second support part 232a and the second extension part 232b may be bonded by the adhesive member.

Referring to Fig. 12, the first extension part 231b may be bent. In detail, the first extension part 231b may be bent in the thickness direction of the electrode assembly 200 (e.g., towards the upper portion of the electrode assembly 200). In one or more embodiments, the first extension part 231b is not bonded to another portion.

The second extension part 232b may be bent. In detail, the second extension part 232b may be bent in the thickness direction of the electrode assembly 200 (e.g., towards the lower portion of the electrode assembly 200). In one or more embodiments, the second extension part 232b is not bonded to another portion.

The sizes of the lowermost first electrode 210a and the uppermost first electrode 210b may be the same or similar. The first support part and the first extension part of the first separator part 231 may be bonded. In one or more embodiments, the first support part is not bonded to another member. The second support part and the second extension part of the second separator part 232 may be bonded. In one or more embodiments, the second support part is not bonded to another member.

The size of the lowermost first electrode 210a does not need to be reduced to reduce or prevent shrinkage of the first separator part 231 and the second separator part 232. The uppermost and lowermost electrodes of the electrode assembly 200 may have the same or similar sizes. The secondary battery 1000 may have improved electric capacity, and damage to the lowermost first electrode during the bonding process may be reduced or prevented.

The above description described that the lowermost electrode and the uppermost electrode of the electrode assembly 200 are first electrodes 210. The above description described that the lowermost electrode and the uppermost electrode of the electrode assembly 200 are positive electrodes, although the present disclosure is not limited thereto.

In detail, the lowermost electrode and the uppermost electrode of the electrode assembly 200 may be second electrodes 220. The lowermost electrode and the uppermost electrode of the electrode assembly 200 may be negative electrodes.

The polarity of the lowermost electrode and the uppermost electrode of the electrode assembly 200 may vary depending on the material of the case 100 of the secondary battery 1000.

For example, if the case 100 includes aluminum Al, the case 100 may be short-circuited with the second electrode 220. If the case 100 includes aluminum Al, the lowermost and uppermost electrodes of the electrode assembly 200 may be the first electrode 210 (positive electrode).

If the case 100 includes stainless steel (SUS), the case 100 may be short-circuited with the first electrode 210. If the case 100 includes stainless steel (SUS), the lowermost and uppermost electrodes of the electrode assembly 200 may be the second electrode 220 (negative electrode).

Hereinafter, the present disclosure will be described in detail with reference to Examples and Comparative Examples. The following examples are intended to illustrate the present disclosure, and the present disclosure is not limited by the following examples.

### Example

The electrode assembly 200 was manufactured as shown in Figs. 4 and 6 to 12 described above. Subsequently, shrinkage and bunching or rolling up of the separator 230 were measured.

### Comparative Example

The electrode assembly of the comparative example was manufactured as shown in Fig. 3 described above. Subsequently, shrinkage and bunching or rolling up of the separator were measured.

**Table 1**

| | Shrinkage evaluation of separators | Rolling up evaluation of separators |
|---|---|---|
| Example | Pass | Pass |
| Comparative Example | Fail | Fail |

The shrinkage of the separator was evaluated by maintaining the electrode assemblies in the Example and Comparative Example at about 137°C for about 30 minutes. The bunching/rolling up of the separator was evaluated 40 times at about 1.5 m. Five units were tested for each of the examples and comparative examples.

Referring to Table 1, it can be seen that the electrode assembly according to the example embodiment does not exhibit shrinkage or bunching or rolling up of the separator. The ends of the separator 230 in the example are bonded. Shrinkage or bunching/rolling up of the separator 230 due to heat and impact transmitted to the separator 230 may be reduced or prevented. The electrode assembly 200 according to the example embodiment may have improved safety and reliability.

The electrode assembly 200 according to the example embodiment includes the separator 230. The separator 230 includes the first separator part 231 at the bottom of the electrode assembly 200 and a second separator part 232 at the top of the electrode assembly 200.

The first separator part 231 includes the first end E1, and the second separator part 232 includes the second end E2. The second separator part 232 is bent toward the first separator part 231. The first separator part 231 and the second separator part 232 are bonded at a lower portion of the electrode assembly 200. The second end E2 may be bonded to the first separator part 231. In one or more embodiments, the first end E1 may be bonded to the second separator part 232, and the second end E2 may be bonded to the first separator part 231.

Shrinkage of the separator 230 due to heat may be reduced or prevented. In detail, shrinkage of the first end E1 and the second end E2 may be reduced or prevented, the likelihood of a short circuit between the first electrode 210 and the second electrode 220 is reduced or prevented, and the likelihood of an explosion of a secondary battery 1000 including the electrode assembly 200 may be reduced or prevented.

The electrode assembly 200 includes the lowermost first electrode 210a and the uppermost first electrode 210b. The lowermost first electrode 210a may be smaller than the uppermost first electrode 210b. For example, the length or width of the lowermost first electrode 210a may be less than that of the uppermost first electrode 210b. The second end E2 and the lowermost first electrode 210a may be spaced apart from each other. A space may be formed in which the first separator part 231 and the second separator part 232 may be bonded. If the first separator part 231 and the second separator part 232 are bonded, damage to the lowermost first electrode 210a may be reduced or prevented. The secondary battery 1000 including the electrode assembly 200 may have improved reliability.

The secondary battery 1000 may be used in portable small electronic devices, such as smartphones, feature phones, notebook computers, digital cameras, and camcorders. A battery module and a battery pack including a plurality of secondary batteries may be used as a power source for driving a motor of a hybrid vehicle or an electric vehicle and as a battery for storing power.

The secondary battery 1000 described above may form a battery module. For example, the battery module may include a plurality of secondary batteries. The plurality of secondary batteries may be connected to each other in series, parallel, or series/parallel by a bus bar.

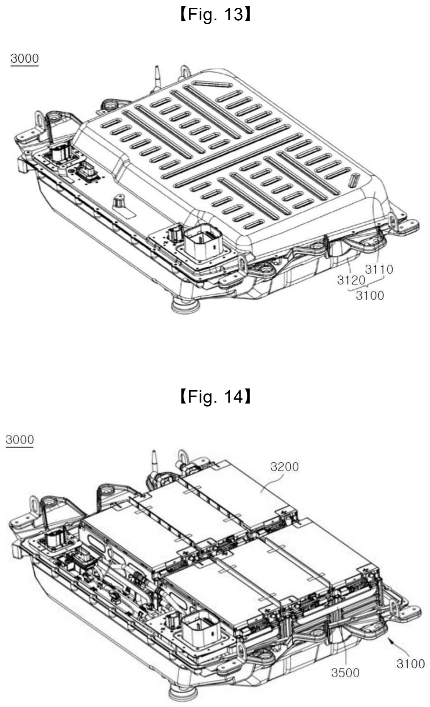

Figs. 13 and 14 show a battery pack 3000 according to one or more example embodiments of the present disclosure. The battery pack 3000 may include a plurality of battery modules 3200 and a housing 3100 for accommodating the plurality of battery modules 3200. For example, the housing 3100 may include first and second housings 3110 and 3120 coupled in opposite directions through the plurality of battery modules 3200. The plurality of battery modules 3200 may be electrically connected to each other by using a bus bar 3500, and the plurality of battery modules 3200 may be electrically connected to each other in a series, parallel, or series-parallel mixed method, thereby obtaining desired (e.g., required or suitable) electrical output. In the drawing, for convenience of illustration, parts, such as cooling units, and external terminals for electrical connection of secondary battery are omitted. In one or more example embodiments, battery pack 3000 may be mounted in a vehicle. The vehicle may be or include, for example, an electric vehicle, a hybrid vehicle, or a plug-in hybrid vehicle. A vehicle may include a four-wheeled vehicle or a two-wheeled vehicle.

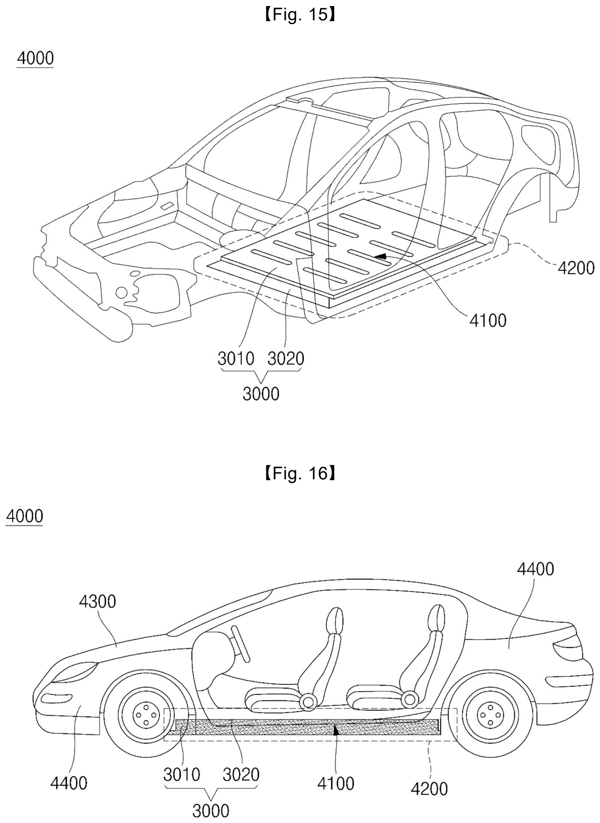

In Fig. 15, a battery pack 3000 may include a battery pack cover 3010, which is a part of a vehicle underbody 4100 and which may correspond to the first housing, and a pack frame 3020, which is located under the vehicle underbody 4100 and which may corresponding to the second housing. The battery pack cover 3010 and the pack frame 3020 may be formed with (e.g., integrally formed with) a vehicle floor 4200. The vehicle underbody 4100 separates the inside and outside of a vehicle, and the pack frame 3020 may be located outside the vehicle.

In Fig. 16, a vehicle 4000 may be formed by combining additional parts, such as a hood 4300 in front of the vehicle 4000 and fenders 4400 respectively located in the front and rear of the vehicle 4000 to a vehicle body part. The vehicle 4000 may include the battery pack 3000 including the battery pack cover 3010 and the pack frame 3020, and the battery pack 3000 may be coupled to the vehicle body part.

The above are only some embodiments for implementing a secondary battery according to the disclosure, the disclosure is not limited to the above, and various modifications can be made by anyone having ordinary skill in the art to which the disclosure pertains without departing from the gist of the disclosure as claimed in the following claims, with functional equivalents thereof to be included therein.

Embodiments are set out in the following clauses.

Clause 1. An electrode assembly comprising: a first electrode; a second electrode; and a separator for separating the first electrode and the second electrode, bent to form insertion parts respectively accommodating the first electrode and the second electrode, and comprising a first separator part at a lowermost portion, a second separator part at an uppermost portion and bonded to the first separator part, and a third separator part between the first separator part and the second separator part.

Clause 2. The electrode assembly of Clause 1, wherein the first separator part comprises a first support part, and wherein the second separator part comprises a second support part and a second extension part bending from an end of the second support part and bonded to the first support part.

Clause 3. The electrode assembly of Clause 2, further comprising an adhesive member bonding the second extension part and the first support part.

Clause 4. The electrode assembly of Clause 3, wherein the first separator part comprises a first end comprising an end of the first support part, and wherein the second separator part comprises a second end bonded to the first separator part and comprising an end of the second extension part.

Clause 5. The electrode assembly of Clause 2, wherein the second extension part and the first support part are bonded by thermal fusion.

Clause 6. The electrode assembly of Clause 5, wherein the first separator part comprises a first end bonded to the second separator part and comprising an end of the first support part, and wherein the second separator part comprises a second end bonded to the first separator part and comprising an end of the second extension part.

Clause 7. The electrode assembly of Clause 2, wherein the separator comprises an overlapping region where the second extension part and a portion of the first support part overlap.

Clause 8. The electrode assembly of Clause 2, wherein the first electrode comprises a lowermost first electrode under the first support part and an uppermost first electrode above the second support part and having a different size from the lowermost first electrode.

Clause 9. The electrode assembly of Clause 8, wherein a width or a length of the lowermost first electrode is less than that of the uppermost first electrode.

Clause 10. The electrode assembly of Clause 1, wherein the first separator part comprises a first support part and a first extension part bending from an end of the first support part, and wherein the second separator part comprises a second support part and a second extension part bending from an end of the second support part and bonded to the first extension part.

Clause 11. The electrode assembly of Clause 10, further comprising an adhesive member bonding the first extension part and the second extension part.

Clause 12. The electrode assembly of Clause 10, wherein the first extension part and the second extension part are bonded by thermal fusion.

Clause 13. The electrode assembly of Clause 10, wherein the separator comprises an overlapping region where the first extension part and the second extension part overlap.

Clause 14. The electrode assembly of Clause 1, wherein the first separator part, the second separator part, and the third separator part are integral.

Clause 15. An electrode assembly comprising: a first electrode; a second electrode; and a separator between the first electrode and the second electrode, bent to form insertion parts respectively accommodating the first electrode and the second electrode, and comprising a first separator part at a lowermost portion, a second separator part at an uppermost portion, and a third separator part between the first separator part and the second separator part and bonded to at least one of the first separator part or the second separator part.

Clause 16. The electrode assembly of Clause 15, wherein the first separator part comprises a first support part and a first extension part bending from an end of the first support part, wherein the second separator part comprises a second support part and a second extension part bending from an end of the second support part, and wherein at least one of the first extension part or the second extension part is bonded to at least one bending part of the third separator part.

Clause 17. The electrode assembly of Claim 16, wherein the first extension part is bonded to a first bending part of the third separator part, and wherein the second extension part is bonded to a second bending part of the third separator part.

Clause 18. The electrode assembly of Clause 16, wherein the first extension part and the second extension part are bonded to a same bending part of the third separator part as the at least one bending part.

Clause 19. The electrode assembly of Clause 16, wherein the first extension part is bonded to the bending part of the third separator part, and wherein the second extension part is bonded to the first extension part.

Clause 20. A secondary battery comprising: a case; and an electrode assembly in the case and comprising: a first electrode; a second electrode; and a separator for separating the first electrode and the second electrode, bent to form insertion parts respectively accommodating the first electrode and the second electrode, and comprising a first separator part at a lowermost portion, a second separator part at an uppermost portion and bonded to the first separator part, and a third separator part between the first separator part and the second separator part.

## Claims

1. An electrode assembly comprising:
a first electrode;
a second electrode; and
a separator between the first electrode and the second electrode, the separator bent to form insertion parts respectively accommodating the first electrode and the second electrode, the insertion parts comprising a first separator part at a lowermost portion, a second separator part at an uppermost portion, and a third separator part between the first separator part and the second separator part, wherein the second separator part is bonded to the first separator part.

2. The electrode assembly as claimed in claim 1, wherein the first separator part comprises a first support part, and
wherein the second separator part comprises a second support part and a second extension part bending from an end of the second support part and bonded to the first support part.

3. The electrode assembly as claimed in claim 2, further comprising an adhesive member bonding the second extension part and the first support part,
and wherein optionally the first separator part comprises a first end comprising an end of the first support part, and
wherein the second separator part comprises a second end bonded to the first separator part and comprising an end of the second extension part.

4. The electrode assembly as claimed in claim 2, wherein the second extension part and the first support part are bonded by thermal fusion,
and wherein optionally the first separator part comprises a first end bonded to the second separator part and comprising an end of the first support part, and
wherein the second separator part comprises a second end bonded to the first separator part and comprising an end of the second extension part.

5. The electrode assembly as claimed in claim 2, 3 or 4, wherein the separator comprises an overlapping region where the second extension part and a portion of the first support part overlap.

6. The electrode assembly as claimed in any one of claims 2 to 5, wherein the first electrode comprises a lowermost first electrode under the first support part and an uppermost first electrode above the second support part and having a different size from the lowermost first electrode,
and wherein optionally a width or a length of the lowermost first electrode is less than that of the uppermost first electrode.

7. The electrode assembly as claimed in claim 1, wherein the first separator part comprises a first support part and a first extension part bending from an end of the first support part, and
wherein the second separator part comprises a second support part and a second extension part bending from an end of the second support part and bonded to the first extension part.

8. The electrode assembly as claimed in claim 10, further comprising an adhesive member bonding the first extension part and the second extension part.

9. The electrode assembly as claimed in claim 10, wherein the first extension part and the second extension part are bonded by thermal fusion.

10. The electrode assembly as claimed in claim 10, 11 or 12, wherein the separator comprises an overlapping region where the first extension part and the second extension part overlap.

11. The electrode assembly as claimed in claim 1, wherein the first separator part, the second separator part, and the third separator part are integral.

12. An electrode assembly comprising:
a first electrode;
a second electrode; and
a separator between the first electrode and the second electrode, the separator bent to form insertion parts respectively accommodating the first electrode and the second electrode, the insertion parts comprising a first separator part at a lowermost portion, a second separator part at an uppermost portion, and a third separator part between the first separator part and the second separator part, wherein the third separator part is bonded to at least one of the first separator part and the second separator part.

13. The electrode assembly as claimed in claim 12, wherein the first separator part comprises a first support part and a first extension part bending from an end of the first support part,
wherein the second separator part comprises a second support part and a second extension part bending from an end of the second support part, and
wherein at least one of the first extension part or the second extension part is bonded to at least one bending part of the third separator part.

14. The electrode assembly as claimed in claim 13, wherein one of:
the first extension part is bonded to a first bending part of the third separator part, and wherein the second extension part is bonded to a second bending part of the third separator part;
the first extension part and the second extension part are bonded to a same bending part of the third separator part as the at least one bending part;
or
the first extension part is bonded to the bending part of the third separator part, and
wherein the second extension part is bonded to the first extension part.

15. A secondary battery comprising:
a case; and
an electrode assembly according to any preceding claim disposed in the case.
